# EUROPÄISCHE PATENTANMELDUNG

(11) **EP 0 618 015 A1**
(43) Veröffentlichungstag der Anmeldung: **05.10.1994**
(21) Anmeldenummer: 94104819.1
(22) Anmeldetag: 26.03.1994
(51) Int. Cl.: B05B 15/12

(54) **Verfahren zum Betrieb einer Spritzkabine und Spritzkabine**

(30) Priorität: 31.03.1993 DE 4310331
(71) Anmelder: FIRMA PAUL RIPPERT, D-33442 Herzebrock-Clarholz (DE)
(72) Erfinder: Schöning, Thomas, D-33442 Herzebrock Clarholz (DE)
(74) Vertreter: Elbertzhagen, Otto

(57) **Zusammenfassung**

In einer solchen Spritzkabine werden Werkstücke auf einem Werkstückplatz (2) mittels einer Spritzvorrichtung (3) mit einem flüssigen, wasserlöslichen Beschichtungsstoff besprüht, und es wird der Sprüh-Überschuß auf zumindest einer Ablauffläche (4, 5) in Spritzrichtung hinter dem Werkstückplatz (2) niedergeschlagen, wobei die Ablauffläche (4, 5) mit dem wasserlöslichen Beschichtungsstoff als Berieselungsmedium beflutet wird. Die Ablauffläche sowie die zugehörigen Zu- und Rückführvorrichtungen (7-11) für das Berieselungsmedium werden mittels Spülwasser aus einem Spülwasservorrat in zeitlichen Abständen gespült. Aus dem Vorratsbehälter (12) wird ein dem Verdunstungsschwund des Berieselungsmediums entsprechender Anteil des Spülwassers entnommen und dem Berieselungsmedium zugeführt. Der Spülwasservorrat wird um einen entsprechenden Anteil von Frischwasser ergänzt, dazu ist der Vorratsbehälter mit einem Frischwasseranschluß (16) ausgestattet.

## Beschreibung

Die Erfindung bezieht sich auf ein Verfahren zum Betrieb einer Spritzkabine, in der Werkstücke mittels einer Spritzvorrichtung mit einem flüssigen, wasserlöslichen Beschichtungsstoff, insbesondere Wasser-Farbe oder -Lack, besprüht werden, wobei der Sprüh-Überschuß des Beschichtungsstoffes an zumindest einer in Spritzrichtung hinter dem Werkstückplatz befindlichen Ablauffläche niedergeschlagen wird, die mit dem wasserlöslichen Beschichtungsstoff als in einem Kreislaufsystem umlaufenden Berieselungsmedium beflutet wird. Ferner betrifft die Erfindung eine Spritzkabine mit einem Werkstückplatz sowie einer manuell oder maschinell betätigbaren Spritzvorrichtung, mittels der Werkstücke auf dem Werkstückplatz mit einem flüssigen, wasserlöslichen Beschichtungsstoff, insbesondere Wasser-Farbe oder -Lack, besprüht werden, und mit zumindest einer Ablauffläche in Spritzrichtung hinter dem Werkstückplatz, die mit dem wasserlöslichen, in einem Kreislaufsystem umlaufend geführten Beschichtungsstoff als Berieselungsmedium beflutet wird und an der der Sprüh-Überschuß des Beschichtungsstoffs niedergeschlagen wird.

Ein Verfahren und eine Vorrichtung dieser Art sowie die zugehörige Spritzkabine ist aus der US-PS 1,746,228 bekannt, dort ist allerdings offengelassen, welche Löslichkeit der Beschichtungsstoff hat.

Im Zuge der Verringerung der Umweltbelastungen werden zunehmend wasserlösliche Beschichtungsstoffe, insbesondere sogenannte Wasserlacke, eingesetzt, die keine hochflüchtigen Bestandteile mehr haben. Diese Beschichtungsstoffe sind deshalb besonders geeignet, um zugleich auch auf den Ablaufflächen einer Spritzkabine als Berieselungsmedium zu dienen. Allerdings ist die Rückführbarkeit und Wiederverwertbarkeit des Berieselungsmediums als Sprühmedium nur möglich, wenn die für das Sprühmedium erforderliche hohe Konzentration der Lack- oder Farbpartikel auch in dem Berieselungsmedium vorliegt. Das jedoch kann zu Sedimentationen an den Ablaufflächen sowie in den zugehörigen Zu- und Rückführvorrichtungen im Kreislaufsystem für das Berieselungsmedium führen, was noch dadurch begünstigt wird, daß aus dem Berieselungsmedium ständig ein bestimmter Wasseranteil verdunstet und darin außerdem die Konzentration der Farb- oder Lackpartikel durch die Aufnahme des Sprühüberschusses, des sogenannten Oversprays, verändert werden kann. Deshalb ist in zeitlichen Abständen eine Spülung des Kreislaufsystems für das Berieselungsmedium mittels eines Spülmediums notwendig, wobei dann das Problem besteht, wie das mit dem Berieselungs- bzw. Beschichtungsmedium versetzte Spülmedium entsorgt wird.

Der Erfindung liegt deshalb die Aufgabe zugrunde, ein Verfahren zum Betrieb einer Spritzkabine sowie eine Spritzkabine der gattungsbildenden Arten vorzuschlagen, bei denen eine Entsorgung des Spülmediums für sich entbehrlich ist.

Diese Aufgabe wird bei einem Verfahren der gattungsgemäßen Art dadurch gelöst, daß die Ablauffläche sowie die zugehörigen Zu- und Rückführvorrichtungen des Kreislaufsystems für das Berieselungsmedium nach dessen jeweiligem Abzug daraus mittels Spülwasser aus einem Spülwasservorrat in zeitlichen Abständen gespült werden, daß aus diesem Spülwasservorrat ein dem Verdunstungsschwund des umlaufenden Berieselungsmediums entsprechender Anteil entnommen und in dessen Kreislauf eingeleitet wird und daß dem Spülwasservorrat ein entsprechender Anteil von Frischwasser zugegeben wird.

Bei der entsprechenden Spritzkabine sind dazu die eine oder mehreren Ablaufflächen sowie die zugehörigen Zu- und Rückführvorrichtungen des Kreislaufsystems für das Berieselungsmedium mit einem Spülwasserkreislauf verbindbar, der einen Vorratsbehälter, eine Pumpe sowie zumindest eine Vorlaufleitung und eine Rücklaufleitung zur Verbindung mit dem Kreislauf für das Berieselungsmedium und einen Frischwasseranschluß aufweist.

Für die Erfindung ist wesentlich, daß sich der mit dem Beschichtungsstoff versetzte Spülwasservorrat ständig regeneriert, indem daraus ein Anteil dem Berieselungsmedium zur Verdünnung zugegeben wird, um den Verdunstungsschwund auszugleichen, während mit dem nicht mit dem Beschichtungsstoff belasteten Frischwasser der Spülwasservorrat entsprechend ergänzt wird.

Da das Spülwasser mit Partikeln des Beschichtungsstoffs belastet ist, die zur Sedimentation neigen, wird vorteilhaft der Spülwasservorrat zwischen den Spülintervallen - zweckmäßig dauernd - umgewälzt, wofür am Vorratsbehälter für das Spülwasser eine separate Umwälzvorrichtung vorgesehen werden kann oder die für den Spülwasserkreislauf erforderliche Pumpe genutzt wird, die dann zusätzlich über ein Wegeventil und eine unmittelbar in den Vorratsbehälter rückführende Kurzschlußleitung ausgangsseitig mit dem Vorratsbehälter für das Spülwasser verbunden ist.

Zweckmäßig läßt sich der Verdunstungsgrad des Berieselungsmediums über eine Viskositätsmessung bestimmen, dazu kann ein Viskositätsmesser in einem in dem Kreislaufsystem des Berieselungsmediums angeordneten Sammelbehälter vorgesehen werden.

Obwohl aus dem Spülwasservorrat immer nur diejenige Menge des Berieselungsmediums ergänzt wird, die durch Verdunstung verlorengeht, erhöht sich das Volumen des Berieselungsmediums auf Dauer durch das darin aufgenommene Overspray. Deshalb wird in weiterer vorteilhafter Ausgestaltung der Erfindung das Volumen des Berieselungsmediums überwacht und der durch den aufgenommenen Sprüh-Überschuß bedingte Volumenanteil in die Versorgung der Spritzvorrichtung rückgeführt. Die entsprechende Volumenüberwachung wird durch eine Niveaumessung in einem Sammelbehälter durchgeführt, der in das Kreislaufsystem des Berieselungsmediums eingefügt ist. Es kann sich dabei um denjenigen Sammelbehälter handeln, in dem sich auch der Viskositätsmesser für das Berieselungsmedium findet.

Während der Spülvorgänge muß das Berieselungsmedium aus dem Kreislaufsystem abgezogen und abgespeichert werden. Dafür sieht man einen oder mehrere Speicherbehälter vor, auf die die für das Kreislaufsystem des Berieselungsmediums notwendige Pumpe aufgeschaltet werden kann.

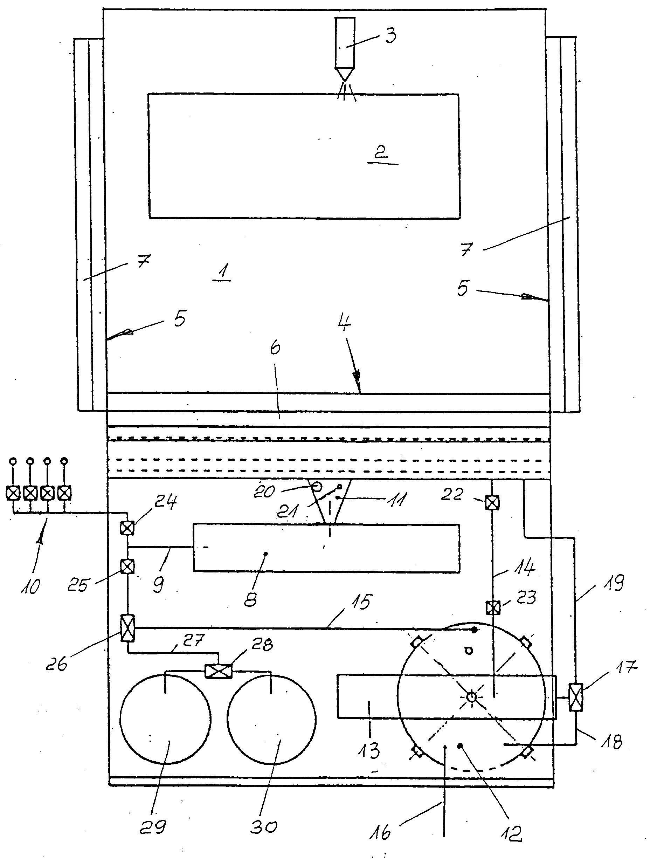

Die Erfindung wird nachfolgend anhand der Zeichnung an einem Ausführungsbeispiel noch näher erläutert. Die Zeichnung zeigt in schematischer Wiedergabe die Draufsicht auf eine Spritzkabine mit angegliederter Berieselungs- und Spüleinrichtung für die Ablaufwände.

Im einzelnen erkennt man in der Zeichnung den Arbeitsraum 1 einer Spritzkabine, in dem sich ein Werkstückplatz 2 befindet. Zur Offenseite des Arbeitsraums 1 hin ist eine Spritzvorrichtung 3 angeordnet, die manuell oder maschinell betätigt werden kann. Auch können mehrere solcher Spritzvorrichtungen 3 in Spritzrichtung vor dem Werkstückplatz 2 vorhanden sein.

Zumindest in Spritzrichtung hinter dem Werkstückplatz 2 findet sich eine rückwärtige Ablaufwand 4, die durch seitliche Ablaufwände 5, welche den Arbeitsraum 1 eingrenzen, ergänzt sein kann. Auf den Ablaufwänden 4 und 5 schlägt sich der Sprüh-Überschuß, das sogenannte Overspray, nieder, welches nicht an den zu beschichtenden Werkstücken anhaftet. Dieses Overspray wird von einem Berieselungsmedium aufgenommen, mit dem die Ablaufwände 4 und 5 von oben nach unten beflutet werden. Dazu finden sich entlang der Oberkanten der Ablaufwände 4 und 5 Spülkästen 6 und 7 aus denen das Berieselungsmedium über Überlaufrinnen auf die Ablaufwände 4 und 5 übertritt. Am Unterende der Ablaufwände 4 und 5 wird das Berieselungsmedium in Sammelrinnen oder -behältern 11 aufgefangen, die mit einer Pumpe 8 verbunden sind. Die Pumpe 8 fördert über Leitungen 9 das Berieselungsmedium zu einer Ventilgruppe 10, über die das Berieselungsmedium wieder den Spülkästen 6 und 7 über nicht dargestellte Leitungen zugeführt wird. Auf diese Weise wird das Berieselungsmedium ständig in einem Kreislauf geführt, die Sammelrinnen und -behälter 11, die Pumpe 8, die Leitungen 9, die Ventilgruppe 10 und die Spülkästen 6 und 7 mit den zugehörigen Zuleitungen bilden Zu- und Rückführvorrichtungen für die Ablaufwände 4 und 6 in diesem Kreislaufsystem.

Als Berieselungsmedium für die Ablaufwände 4 und 5 wird das über die Spritzvorrichtung 3 ausgetragene Sprühmedium verwendet, es handelt sich hierbei um einen wasserlöslichen Beschichtungsstoff, insbesondere um sogenannte Wasserfarben oder -lacke, die einen der Verdunstung unterliegenden Wasseranteil aufweisen.

Das Kreislaufsystem des Berieselungsmediums muß in bestimmten zeitlichen Abständen mittels Spülwasser durchspült bzw. bespült werden. Dazu befindet sich in einem Vorratsbehälter 12 eine vorgegebene Menge des Spülwassers, die sich durch eine Teilentnahme und Ersatz durch Frischwasser ständig regeneriert.

In räumlicher Nähe zum Vorratsbehälter 12 findet sich eine Pumpe 13, die über eine Vorlaufleitung 14 mit den Spülkästen 6 und 7 oberhalb der Ablaufflächen oder -wände 4 und 5 verbunden werden kann. Zu der Pumpe 13 hin führt eine Rücklaufleitung 15, die auf den Ausgang der Pumpe 8 für das Berieselungsmedium aufgeschaltet werden kann. Mit Unterstützung der Pumpe 8 kann das Spülwasser somit im Kreislauf über das Kreislaufsystem des Berieselungsmediums geführt werden, um Sedimentationen darin aufzulösen und mitzunehmen. Nach dem Spülvorgang wird über die Rücklaufleitung 15 das gesamte Spülwasser wieder in den Vorratsbehälter 12 zurückgepumpt.

Damit Sedimentationen in dem mit dem Beschichtungsstoff belasteten Spülwasser im Vorratsbehälter 12 vermieden werden, wird die Pumpe 13, solange sie für die Spülvorgänge nicht benötigt wird, zur Umwälzung des Spülwassers im Vorratsbehälter 12 genutzt. Über ein Wegeventil 17 und eine Kurzschlußleitung 18 ist dazu ein Ausgang der Pumpe 13 unmittelbar mit dem Vorratsbehälter 12 verbunden.

Infolge Entzugs des Wasseranteils, der beim Betrieb der Spritzkabine aus dem Berieselungsmedium verdunstet, findet eine Verdickung des Berieselungsmediums statt, die mittels eines Viskositätsmessers 20 im Sammelbehälter 11 überwacht wird. Bei Überschreiten eines Viskositätsgrenzwertes wird das Berieselungsmedium verdünnt, hierzu wird Spülwasser aus dein Vorratsbehälter 12 über die Pumpe 13 das Ventil 17 und eine Leitung 19 in das Kreislaufsystem für das Berieselungsmedium gepumpt. Der dem Vorratsbehälter 12 dadurch entzogene Spülwasseranteil wird durch Frischwasser ergänzt, dazu ist der Vorratsbehälter 12 mit einem entsprechenden Frischwasseranschluß 16 ausgestattet.

Durch die Aufnahme des Oversprays nimmt das Berieselungsmedium während des Betriebs der Spritzkabine ständig an Volumen zu. Der Volumenzuwachs des Berieselungsmediums wird im Sammelbehälter 11 von einem Niveaumesser 21 überwacht. Bei Überschreitung eines Niveaugrenzwertes fördert die Pumpe 8 das Überschußvolumen des Berieselungsmediums über ein erstes Wegeventil 26, eine Leitung 27 und ein zweites Wegeventil 28 in einen von mehreren Speicherbehältern 29 und 30, von wo es abgezogen und in den Vorrat des Sprühmediums zurückgeführt wird, welches der Spritzvorrichtung 3 zugeleitet wird.

Die Speicherbehälter 29 und 30 dienen aber auch dazu, während der Spülvorgänge das Berieselungsmedium, das aus dem zugehörigen Kreislaufsystem abgezogen werden muß, aufzunehmen. Die Speicherbehälter 29 und 30 sind mit Füllstandsgebern ausgestattet, damit zumindest während der Spülvorgänge der Volumenzuwachs des Berieselungsmediums durch die Aufnahme des Oversprays erfaßt und die dementsprechende Rückführung eines Anteils des Berieselungsmediums zum Sprühmedium veranlaßt werden kann.

Für die Trennung des Spülwassersystems und des Kreislaufs des Berieselungsmediums sind in der Vorlaufleitung 14, die an die Pumpe 13 anschließt, sowie in die verzweigte Leitung 9 am Ausgang der Pumpe 8 Sperrventile 22, 23, 24 und 25 eingefügt, die von einer Steuerungsanlage betätigt werden.

## Patentansprüche

1. Verfahren zum Betrieb einer Spritzkabine, in der Werkstücke mittels einer Spritzvorrichtung mit einem flüssigen, wasserlöslichen Beschichtungsstoff, insbesondere Wasser-Farbe oder -Lack, besprüht werden, wobei der Sprüh-Überschuß des Beschichtungsstoffs an zumindest einer in Spritzrichtung hinter dem Werkstuckplatz befindlichen Ablauffläche niedergeschlagen wird, die mit dem wasserlöslichen Beschichtungsstoff als in einem Kreislaufsystem umlaufenden Berieselungsmedium beflutet wird,
dadurch gekennzeichnet,
daß die Ablauffläche sowie die zugehörigen Zu- und Rückführvorrichtungen des Kreislaufsystems für das Berieselungsmedium nach dessen jeweiligem Abzug daraus mittels Spülwasser aus einem Spülwasservorrat in zeitlichen Abständen gespült werden, daß aus diesem Spülwasservorrat ein dem Verdunstungsschwund des umlaufenden Berieselungsmediums entsprechender Anteil entnommen und in dessen Kreislauf eingeleitet wird und daß dem Spülwasservorrat ein entsprechender Anteil von Frischwasser zugegeben wird.

2. Verfahren nach Anspruch 1,
dadurch gekennzeichnet,
daß der Spülwasservorrat zwischen den Spülintervallen umgewälzt wird.

3. Verfahren nach Anspruch 1,
dadurch gekennzeichnet,
daß die Umwälzung des Spülwasservorrates dauernd erfolgt.

4. Verfahren nach einem der Ansprüche 1 - 3,
dadurch gekennzeichnet,
daß der Verdunstungsgrad des Berieselungsmediums über eine Viskositätsmessung bestimmt wird.

5. Verfahren nach einem der Ansprüche 1 - 4,
dadurch gekennzeichnet,
daß das Volumen des Berieselungsmediums überwacht und der durch den aufgenommenen Sprüh-Überschuß bedingte Volumenanteil in die Versorgung der Spritzvorrichtung rückgeführt wird.

6. Verfahren nach Anspruch 5,
dadurch gekennzeichnet,
daß die Volumenüberwachung durch eine Niveaumessung an einem Sammelbehälter für das Berieselungsmedium erfolgt.

7. Spritzkabine mit einem Werkstückplatz sowie einer manuell oder maschinell betätigbaren Spritzvorrichtung, mittels der Werkstücke auf dem Werkstückplatz mit einem flüssigen, wasserlöslichen Beschichtungsstoff, insbesondere Wasser-Farbe oder -Lack, besprüht werden, und mit zumindest einer Ablauffläche in Spritzrichtung hinter dem Werkstückplatz, die mit dem wasserlöslichen, in einem Kreislaufsystem umlaufend geführten Beschichtungsstoff als Berieselungsmedium beflutet und an der der Sprüh-Überschuß des Beschichtungsstoffs niedergeschlagen wird,
dadurch gekennzeichnet,
daß die eine oder mehreren Ablaufflächen (4, 5) sowie die zugehörigen Zu- und Rückführvorrichtungen (7-11) des Kreislaufsystems für das Berieselungsmedium mit einem Spülwasserkreislauf verbindbar sind, der einen Vorratsbehälter (12) eine Pumpe (13) sowie zumindest eine Vorlaufleitung (14) und eine Rücklaufleitung (15) zur Verbindung mit dem Kreislauf für das Berieselungsmedium und einen Frischwasseranschluß (16) aufweist.

8. Spritzkabine nach Anspruch 7,
dadurch gekennzeichnet,
daß am Vorratsbehälter (12) für das Spülwasser eine Umwälzvorrichtung (13, 17, 18) angeschlossen ist.

9. Spritzkabine nach Anspruch 8,
dadurch gekennzeichnet,
daß die Umwälzvorrichtung aus der Pumpe (13) für den Spülwasserkreislauf und einer über ein Wegeventil (17) an einem Pumpenausgang angeschlossenen, unmittelbar in den Vorratsbehälter (12) rückführenden Kurzschlußleitung (18) besteht.

10. Spritzkabine nach Anspruch 9,
dadurch gekennzeichnet,
daß an den Pumpenausgang über das Wegeventil (17) eine Speiseleitung (19) zur Dunstwasserergänzung angeschlossen ist, die mit dem Kreislaufsystem des Berieselungsmediums verbunden ist.

11. Spritzkabine nach einem der Ansprüche 7 - 10,
dadurch gekennzeichnet,
daß in einem Sammelbehälter (11) für das Berieselungsmedium ein Viskositätsmesser (20) und ein Niveaumesser (21) angeordnet sind.

12. Spritzkabine nach einem der Ansprüche 7 - 11,
dadurch gekennzeichnet,
daß das Kreislaufsystem des Berieselungsmediums mit zumindest einem das Berieselungsmedium während der Spülvorgänge aufnehmenden Speicherbehälter (29, 30) verbindbar ist.
